Europäisches Patentamt

European Patent Office

Office européen des brevets

(19)

(11) **EP 0 768 513 A2**

(12) **EUROPÄISCHE PATENTANMELDUNG**

(43) Veröffentlichungstag:
16.04.1997 Patentblatt 1997/16

(51) Int. Cl.⁶: **G01C 9/06**, G01C 9/12

(21) Anmeldenummer: 96114692.5

(22) Anmeldetag: 13.09.1996

(84) Benannte Vertragsstaaten:
**DE FR GB IT SE**

(30) Priorität: **13.10.1995 DE 19538114**

(71) Anmelder: **ROBERT BOSCH GMBH**
**70442 Stuttgart (DE)**

(72) Erfinder: **Zabler, Erich, Dr.-Ing.**
**76297 Stutensee (DE)**

(54) **Neigungssensor**

(57)     Es wird ein Neigungssensor vorgeschlagen, der ein, in seiner Drehlage, relativ zu einem Neigungsbewegungen ausführenden Gehäuse, veränderliches Drehpendel (3) aufweist, das ein Magnetfeld erzeugt. Es ist vorzugsweise mindestens ein anisotropisches magnetoresistives Element (15,16) als gehäusefester Sensor (12) vorhanden, mit dem eine Änderung des Magnetfeldes detektierbar ist. Das Drehpendel (3) verharrt in Lotrichtung (9) aufgrund einer geringen Gewichtsunsymmetrie in seiner Ruhestellung. Die mit dem Drehpendel (3) erzeugbaren magnetischen Feldlinien (B) ändern ihre Richtung relativ zum Sensor (12) analog zu einer Änderung des Drehwinkels (α) des Drehpendels (3) aufgrund einer, beispielsweise durch ein Kraftfahrzeug hervorgerufenen, Neigungsbewegung.

Fig.1

EP 0 768 513 A2

## Beschreibung

Stand der Technik

Die Erfindung betrifft einen Neigungssensor, insbesondere für die Erfassung der Lage oder Lageänderung eines beweglichen Körpers, nach dem Oberbegriff des Hauptanspruchs.

Neigungssensoren der gattungsgemäßen Art werden vorzugsweise in Fahrzeugen angeordnet, bei denen beispielsweise unfallbedingte Lageänderungen oder sonstige die Lagestabilität beeinflussende Situationen erfaßt und entweder zur Erzeugung eines Warnsignals oder zu entsprechenden Steuersignalen für Sicherheitseinrichtungen herangezogen werden. Insbesondere soll hiermit ein Überrollvorgang erkannt und in seinen Auswirkungen vermindert werden.

Es ist bereits aus der DE-OS 41 01 060 ein Neigungssensor bekannt, bei dem ein Hall-Element im Gehäuse einer Sensoranordnung angebracht ist, das in Wirkverbindung mit einem sich mehr oder weniger frei bewegenden Magnetelement in einem Trägheitskörper steht. Eine Kipp- oder Neigungsbewegung des Trägheitskörpers führt zu einer Relativbewegung zwischen dem Magnetelement und dem Hall-Element, wodurch ein entsprechendes Ausgangssignal erzeugbar ist.

Weiterhin lassen sich auch Quecksilberschalter als beschleunigungsempfindliche Sensoren in Fahrzeugen einsetzen, die bei Lageänderungen des fließenden Quecksilbers elektrische Schaltvorgänge auslösen und damit Sicherheitseinrichtungen aktivieren können. Solche Sensoren sind aus „1141, Ingenieurs de l'Automobile (1982) No.6, S.76" bekannt. Nachteilig ist hierbei, daß die Verwendung von Quecksilber aus Umweltschutzgründen bei unfallgefährdeten Fahrzeugen nur bedingt möglich und der Funktionsbereich auf Temperaturen bis hinunter auf -35°C begrenzt ist. Üblicherweise ist jedoch die untere Betriebstemperatur in der Kraftfahrzeugelektronik auf -40°C spezifiziert.

Ein Erfassung eines Drehwinkels eines beweglichen Körpers ist für sich gesehen in dem VDI-Bericht Nr. 509, (VDI-Verlag 1984), Seiten 263 bis 268, im Aufsatz "Neue, alternative Lösungen für Drehzahlsensoren im Kraftfahrzeug auf magnetoresistiver Basis" beschrieben, wobei mit magnetischen Tangentialsonden als Sensoren eine besonders einfache und insbesondere gegen Luftspaltschwankungen unempfindliche Abtastung von Inkrementalstrukturen an drehenden Wellen oder Zahnrädern durchführbar ist. In dieser bekannten Druckschrift ist auf Seite 264 unter Punkt 3.3 auch der Einsatz von Sensoren beschrieben, die sich den oben erwähnten sogenannten Halleffekt zur Abtastung einer Änderung eines magnetischen Feldes zu Nutze machen. Diese in bekannter Weise ausgeführten Hallsensoren nutzen eine Ablenkung eines zwischen zwei Anschlußpolen fließenden Stromes durch ein senkrecht dazu stehendes magnetisches Feld aus. Eine Ladungsträgerverschiebung in Richtung der magnetischen Feldlinien führt hierbei zum Entstehen einer sogenannten Halispannung, die quer zur Stromflußrichtung abnehmbar ist. Unter Ausnutzung der für diesen Zweck optimalen Eigenschaften von Halistrukturen in Haibleitermaterialien verläuft die Stromflußrichtung in dieser Hallstruktur in der Regel koplanar in der Ebene eines sogenannten Halbleiter-Wafers, zum Beispiel eines Silizium-Halbleiter-Chips.

Vorteile der Erfindung

Der erfindungsgemäße Neigunssensor der eingangs beschriebenen Art ist mit den kennzeichnenden Merkmalen des Anspruchs 1 insbesondere dadurch vorteilhaft weitergebildet, daß mit einer relativ kostengünstig herzustellenden Anordnung über eine hochgenau durchzuführende Drehwinkelmessung eine Erfassung von Neigungsbewegungen eines Fahrzeugs sicher durchführbar ist. Insbesondere zum Zweck des Überschlagschutzes wird hierbei in Roll- und Nickachse des Fahrzeugs der Winkel zur Lotrichtung ausgewertet. Die Erfassung des Winkels ist hierbei weitgehend unabhängig von translatorischen Beschleunigungen des Fahrzeugs, welche im Fahrbetrieb das Meßergebnis erheblich verfälschen würden.

Für den Fall, daß in der einen oder anderen Achse jeweils ein bestimmter Grenzwinkel oder auch ein kleinerer Neigungswinkel in Verbindung mit einer zunehmenden Drehgeschwindigkeit überschritten wird, können in vorteilhafter Weise Überroll-Schutzeinrichtungen (wie z. B. Bügel, Gurtstraffer, etc.) ausgelöst werden. Der Neigungssensor ist auch deswegen vorteilhaft, da die Auswertung weitgehend unbeeinflußt von axialen oder radialen Toleranzen der jeweiligen Positionen der Magnete auf dem erfindungsgemäßen Drehpendel ist; allein der Drehwinkel $\alpha$ ist hier für die Erzeugung des Feldvektors der Feldlinien der Magneten ausschlaggebend.

Der Sensor zur Auswertung des Feldvektors kann hierbei durchaus in einem Abstand von ca. 3 bis 8 mm von den Magneten angebracht werden, da er nur eine relativ geringe Magnetfeldstärke benötigt und ab einer gewissen unteren Schwelle von dieser praktisch unabhängig ist. So kann in vorteilhafter Weise eine Innenwand zur Aufnahme der Lager für die Achse des Drehpendels angeordnet werden. Damit Verfälschungen des Meßergebnisses vermieden werden, sollten in der Nähe des Neigungssensors keine magnetisch leitfähigen Teile oder andere Dauermagnete vorhanden sein.

Der erfindungsgemäße Neigungssensor ermöglicht auf einfache Weise eine sehr genaue und kontinuierliche Erfassung von Drehwinkeln bis ±90° und der daraus mit elektrischen Mitteln ableitbaren Drehgeschwindigkeit. Da das Drehpendel und der Sensor in getrennten Kammern anordbar sind ist es auf einfache Weise möglich, die Kammer mit dem Drehpendel mit einer Flüssigkeit zur Erhöhung der Drehmasse zu füllen ohne den Sensor in der anderen Kammer zu beeinträchtigen. Hierbei ist es vorteilhaft, daß der Auftrieb in der Flüssigkeit die Lagerkräfte verringert und die Resonanzfrequenz des somit leichteren Pendels tiefer liegt. Zum Ausgleich eventueller Volumenerweiterungen der Flüssigkeit bei Erwärmung kann ein Ausgleichsraum, beispielsweise auch eine Membran, an einer mechanisch unkritischen Stelle des Sensorgehäuses angebracht werden.

Es wird hierbei davon ausgegangen, daß die im Prinzip schwingungsfähige Anordnung eine sehr tiefe Eigenfrequenz (<< 1 Hz) aufzuweisen hat und dadurch unempfindlich gegenüber höherfrequenten Beschleunigungsanregungen ist, die nicht zu einem Ansprechen des Neigungssensors führen sollen. Die Pendelbewegungen können somit in vorteilhafter Weise bedämpft werden, eine Anregung des Neigungssenors sollte aber lediglich im äußerst niederfrequenten, durch die Gravitation verursachten Bereich, der Pendelbewegungen stattfinden um beispielsweise Überrollvorgänge zu erkennen.

Die Auswerteelektronik für den Neigungssensor kann auf einfache Weise zumindest teilweise schon in der Kammer mit den Sensorelementen unter Verwendung standardisierter Elektronikbausteine untergebracht werden. Als Sensorelemente können Dünnschichtsensoren (Nickel-Eisen-Elemente), vorzugsweise anisotrope magnetoresistive Elemente (AMR-Elemente) verwendet werden; diese werden auch als „Pseudohall-Elemente" bezeichnet.

Zeichnung

Ein Ausführungsbeispiele des erfindungsgemäßen Neigungssensors wird anhand der Zeichnung erläutert. Es zeigen:

    Figur 1 eine Schnittdarstellung eines Neigungssensors mit einem magnetischen Drehpendel;
    Figur 2 eine Perspektivdarstellung des Drehpendels,
    Figur 3 eine prinzipielle Anordnung der Sensorelemente des Neigungssensors;
    Figur 4 ein weiteres Ausführungsbeispiel eines Magneten am Drehpendel;
    Figur 5 ein im Prinzip scheibenförmiges Ausführungsbeispiel eines Drehpendels;
    Figur 6 ein Ausführungsbeispiel eines Drehpendels mit steckbaren Pendelplatten und
    Figur 7 ein gegenüber der Figur 1 mit zusätzlichen Magneten versehenes Drehpendel.

Beschreibung des Ausführungsbeispiels

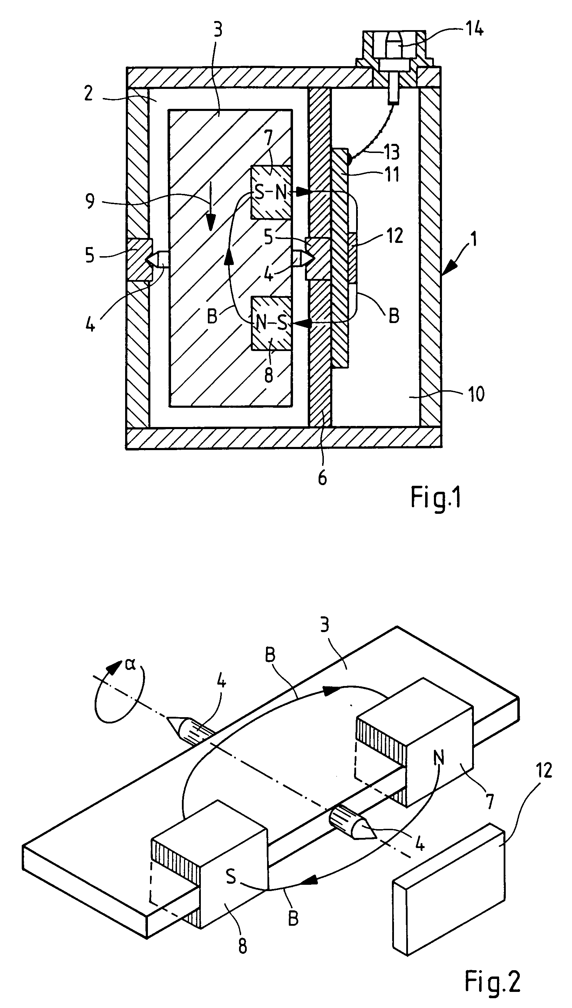

In Figur 1 ist ein Neigungssensor 1 gezeigt, der vorzugsweise ein Gehäuse aus nichtmagnetischem Material besitzt und in dessen in linker Kammer 2 ein Drehpendel 3 angeordnet ist. Das Drehpendel 3 ist über eine Achse 4 drehbar in Lagerbuchsen 5, vorzugsweise in Spitzenlagern, gehalten und trägt auf der, einer ebenfalls nichtmagnetischen Innenwand 6 zugewandten Seite Dauermagneten 7 und 8. Das Drehpendel 3 ist in Lotrichtung (Pfeil 9) hinsichtlich einer Gewichtsverteilung derart leicht unausgeglichen, so daß es aufgrund der Schwerkraft ohne andere äußere Einflüsse in der dargestellten lotrechten Lage verharrt. Die Dauermagnete 7 und 8 erzeugen ein richtungshomogenes Magnetfeld B, dessen Feldlinien auch jenseits der Innenwand 6 verlaufen.

Die Innenwand 6 kann zur Erzeugung einer für das dynamische Verhalten unter Umständen vorteilhafte Dämpfung des schwingungsfähigen Pendelsystems auch aus einem nicht ferromagnetischen, elektrisch leitfähigem Material (z.B. Kupfer oder Aluminium) bestehen bzw. mit diesen Materialien beschichtet sein. Bei einer Bewegung des Drehpendels entstehen aufgrund einer Mitbewegung des magnetischen Feldes Wirbelströme in dem leitfähigen Material, die nach dem Prinzip einer Wirbelstrombremse die Pendelbewegung abbremsen.

In einer rechten Kammer 10 des Neigungssensors 1 ist auf der Innenwand 6 eine Schaltungsanordnung 11 angebracht, die einen magnetfeldempfindlichen Sensor 12 trägt. Über Verbindungsleitungen 13 und eine Anschlußvorrichtung 14 sind die Ausgangssignale des Sensors 12 bzw. der Schaltungsanordnung 11 mit einer externen, hier nicht dargestellten, Auswerteeinrichtung oder Schutzeinrichtung verbindbar.

Figur 2 zeigt eine perspektivische Darstellung des Drehpendels 3 und des Sensors 12, aus der insbesondere die vom Drehwinkel $\alpha$ abhängige Richtung der Feldlinien B und deren Einfluß auf den feststehenden Sensor 12 erkennbar ist.

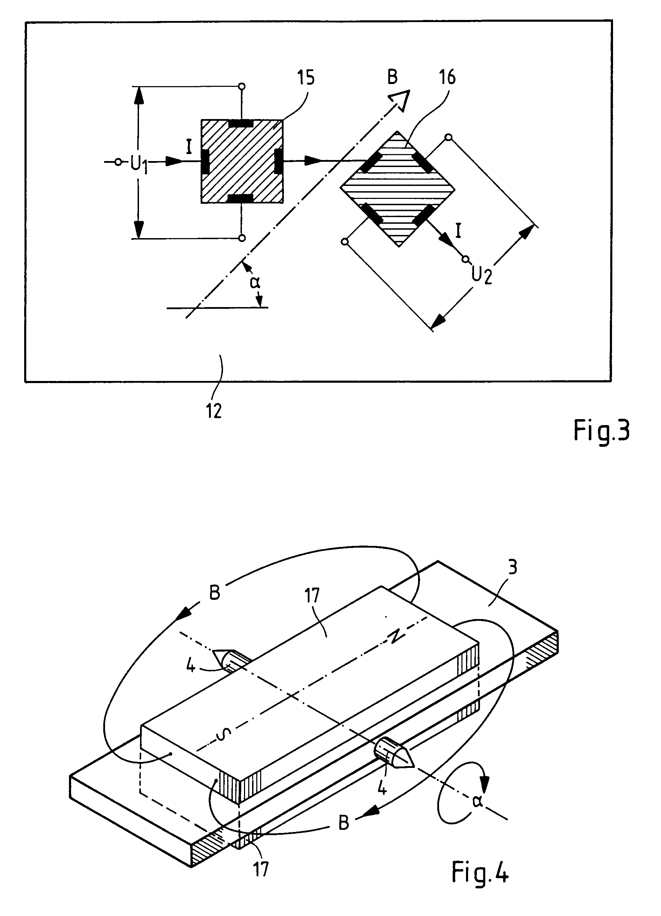

Eine Detaildarstellung des Sensors 12 zeigt Figur 3. Hier sind als Beispiel für die Erfassung der Richtungsänderung der Feldlinien B in Abhängigkeit vom Drehwinkel $\alpha$ die in der Beschreibungseinleitung erwähnten AMR-Elemente 15 und 16 auf dem Sensor 12 angeordnet. Die beiden AMR-Elemente 15 und 16 werden von einem Strom I durchflossen, wobei die geometrische Anordnung der Anschlüsse für den Strom I und damit die Stromrichtung in den beiden AMR-Elementen 15 und 16 bei diesem Ausführungsbeispiel um 45° oder ähnlich große Winkel versetzt sind. Rechtwinklig zur Stromflußrichtung werden die Spannungen $U_1$ (AMR-Element 15) und $U_2$ (AMR-Element 16) abgegriffen. Die Auswertung der Spannungen $U_1$ und $U_2$ läßt, wie in der Beschreibungseinleitung erläutert, über den unterschiedlichen Einfluß der Richtung der Feldlinien B einen direkten Schluß auf den Drehwinkel $\alpha$ des Drehpendels 3 zu, wobei diese z.B. über folgende Beziehung miteinander verknüpft sein können:

$$\alpha = \tfrac{1}{2} \arctan (U_1/U_2).$$

Ein Ausführungsvariante des Drehpendels 3 mit einem einzigen Dauermagneten 17 zeigt Figur 4. Hier sorgt der einstückige Magnet 17 für die erforderliche magnetische Feldstärke mit den Feldlinien B, die zu einer Auswertung der Drehlage des Drehpendels 3 erforderlich sind. Bei dieser Ausführungsform oder auch unter Weglassung eines zusätzlichen Magneten ist auch eine direkte Magnetisierung des Drehpendels 3 möglich, das hierzu lediglich aus einem geeigneten hartmagnetischen Material hergestellt werden muß. Die geometrische Gestaltung der Dauermagneten 7, 8. bzw. 17 oder auch des Drehpendels 3 kann von der dargestellten Form abweichen und dem jeweiligen Anwendungsfall angepaßt werden. Beispielsweise sind auch einfach herzustellende runde Dauermagneten anwendbar.

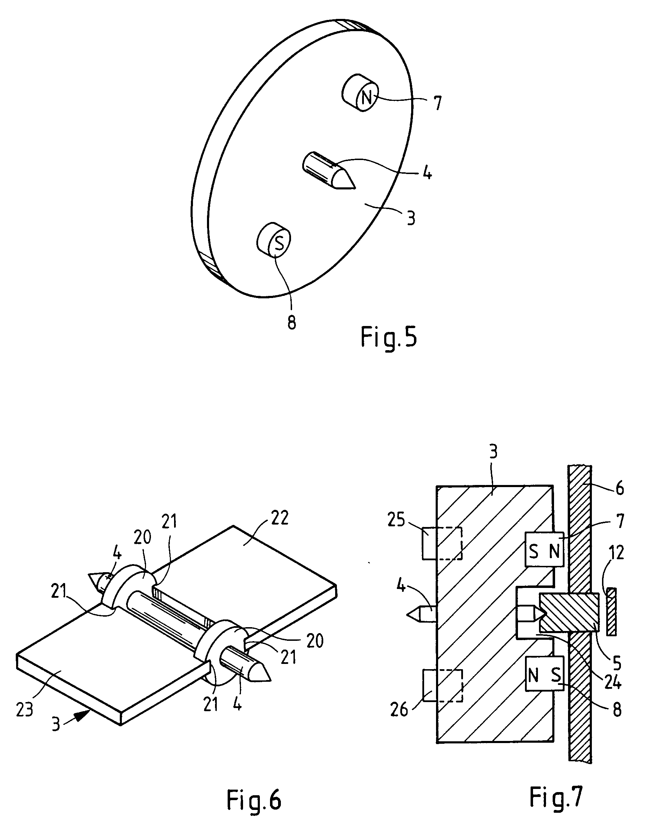

Bei einem Ausführungsbeispiel nach Figur 5 ist das Drehpendel 3 als kreisförmige Scheibe ausgeführt, die lediglich analog zum Ausführungsbeispiel nach der Figur 1 und den unten noch folgenden Beispielen eine leichte Unsymmetrie aufweisen muß.

Figur 6 zeigt eine weitere Ausführungsvariante des Drehpendels 3 mit einer durchgehenden Achse 4 auf der einstückig mit der Achse hergestellte, ringförmige Erweiterungen 20 vorhanden sind. Die Erweiterungen 20 besitzen Ausnehmungen 21, in die Pendelplatten 22 und 23 zur Bildung des Drehpendels 3 eingelassen werden.

Das Drehpendel 3 nach Figur 7 besitzt eine geänderte Gestaltung der Spitzenlagerung an der Lagerbuchse 5, die hier in den Bereich des Drehpendels 3 in eine entsprechende Ausnehmung 24 hineingezogen ist. Hierbei ist gewährleistet, daß die Dauermagnete 7 und 8 dicht an die Innenwand 6 herangezogen werden können und trotzdem eine optimale Lagerung der Achse 4 erreicht wird. Um eine Symmetrierung der Lagerkräfte zu erhalten, kann das Drehpendel 3 auch an seiner dem Sensor 12 abgewandten Seite Ausgleichsgewichte 25 und 26 tragen. Diese Ausgleichsgewichte 25 und 26 können auch zusätzliche Bremsmagnete sein, die zusammen mit einer elektrisch leitfähigen Gehäusewand eine Wirbelstrombremsung, wie anhand der Figur 1 beschrieben, auch hier ermöglichen.

Die Platte des Drehpendels 3 als Träger für die Dauermagnete 7 und 8 bei allen bisher beschriebenen Ausführungsbeispielen kann in vorteilhafter Weise auch aus ferromagnetischen Materialien hergestellt sein. Dadurch wirkt diese Platte gleichzeitig als sog. Eisenrückschluß und kann somit die magnetische Feldstärke am Ort des Sensors 12 verstärken. In diesem Fall dürfen die Dauermagnete 7 und 8 jedoch nicht oberflächenbündig in der Platte versenkt sein, da sonst die magnetischen Feldlinien keine ausreichende Krümmung zum Sensor 12 hin und an seinem Ort auch keine ausreichende Dichte aufweisen.

## Patentansprüche

1. Neigungssensor, mit

   - einem, in seiner Lage, relativ zu einem Neigungsbewegungen ausführenden Gehäuse, veränderlichen Körper, der auf ein Magnetfeld einwirkt und

   - einem gehäusefesten Sensor (12), mit dem eine Richtungsänderung des Magnetfeldes detektierbar ist, **dadurch gekennzeichnet**, daß

   - der in seiner Lage veränderliche Körper ein Drehpendel (3) ist, das in Lotrichtung (9) aufgrund einer geringen Gewichtsunsymmetrie in seiner Ruhestellung verharrt und daß

   - mit dem Drehpendel (3) magnetische Feldlinien (B) erzeugbar sind deren Richtung sich analog zu einer Änderung des Drehwinkels ($\alpha$) des Drehpendels (3) gegenüber dem Gehäuse ändert.

2. Neigungssensor nach Anspruch 1, **dadurch gekennzeichnet**, daß

   - zwei Kammern (2,10) in einem Gehäuse aus im wesentlichen nichtmagnetischem Material vorhanden sind, wobei in einer Kammer (2) das Drehpendel (3) in Lagerbuchsen (5), vorzugsweise Spitzenlagern, gehalten ist und jenseits einer Innen-wand (6) in der zweiten Kammer (10) der Sensor (12) angeordnet ist.

3. Neigungssensor nach Anspruch 1 oder 2, **dadurch gekennzeichnet**, daß

   - der Sensor (12) aus mindestens einem anisotropen magnetoresistiven Element (AMR-Element)(15,16) besteht.

4. Neigungssensor nach Anspruch 3, **dadurch gekennzeichnet**, daß

   - zwei AMR-Elemente (15,16) vorhanden sind, deren Stromflußrichtung um ca. 45° gegeneinander versetzt ist.

5. Neigungssensor nach einem der Ansprüche 2 bis 4, **dadurch gekennzeichnet**, daß

   - die erste Kammer (2) mit dem Drehpendel (3) mit einer Flüssigkeit gefüllt ist.

6. Neigungssensor nach einem der vorhergehenden Ansprüche, **dadurch gekennzeichnet**, daß

   - das Drehpendel (3) an seinen gegenüberliegenden Flügeln jeweils einen Dauermagneten (7,8) trägt.

7. Neigungssensor nach Anspruch 6, **dadurch gekennzeichnet**, daß

   - die Trägerplatte für die Dauermagnete (7,8) aus einem ferromagnetischen Material ist und die Dauermagnete (7,8) einen vorgegebenen Betrag aus der Oberfläche der Trägerplatte herausragen.

8. Neigungssensor nach Anspruch 6 oder 7, **dadurch gekennzeichnet**, daß

   - die Trägerplatte für die Dauermagnete (7,8) auf der dem Sensor (12) abgewandten Seite Ausgleichsgewichte (25,26) aufweist.

9. Neigungssensor nach Anspruch 8, **dadurch gekennzeichnet**, daß

   - die Ausgleichsgewichte (25,26) ebenfalls Dauermagnete sind.

10. Neigungssensor nach einem der Ansprüche 1 bis 5, **dadurch gekennzeichnet**, daß

   - das Drehpendel (3) einen einstückigen, symmetrisch zur Drehachse (4) angeordneten, Dauermagneten (17) trägt, dessen nutzbare Feldlinien (B) quer zur Drehachse verlaufen.

11. Neigungssensor nach einem der Ansprüche 1 bis 5, **dadurch gekennzeichnet**, daß

   - das Drehpendel (3) aus einem hartmagnetischen Material hergestellt ist und dauerhaft quer zur Drehachse magnetisiert ist.

12. Neigungssensor nach einem der vorhergehenden Ansprüche, **dadurch gekennzeichnet**, daß

   - das Drehpendel (3) im Bereich der Achse (4) und der Lagerbuchse (5) eine Ausnehmung (24) aufweist, in die die Lagerbuchse (5) einen vorgegebenen Betrag hineinreicht.

13. Neigungssensor nach einem der Ansprüche 1 bis 9, **dadurch gekennzeichnet**, daß

   - die durchgehende Achse (4) des Drehpendels (3) ringförmige Erweiterungen (20) mit Ausnehmungen (21) für die Aufnahme jeweils einer Teilplatte (22,23) des Drehpendels (3)aufweist.

14. Neigungssensor nach einem der vorhergehenden Ansprüche, **dadurch gekennzeichnet**, daß

   - die Trägerplatte des Drehpendels (3) rechteckförmig ist.

15. Neigungssensor nach einem der Ansprüche 1 bis 13, **dadurch gekennzeichnet**, daß

   - die Trägerplatte des Drehpendels (3) kreisrund ist.

16. Neigungssensor nach einem der vorhergehenden Ansprüche, **dadurch gekennzeichnet**, daß

   - an mindestens einer den Dauermagneten (7,8;25,26) gegenüberliegenden Wand (6) elektrisch leitfähige Flächen vorhanden sind, in die durch die Bewegungen des Drehpendels (3) ein bremsender Wirbelstrom induzierbar ist.

17. Neigungssensor nach einem der vorhergehenden Ansprüche, **dadurch gekennzeichnet**, daß

   - der Neigungssensor (1) in ein Kraftfahrzeug eingebaut ist und bei Überschreiten vorgegebener Grenzwerte einer Drehwinkeländerung des Drehpendels (3) oder einer vorgegebenen Änderung der Drehwinkelgeschwindigkeit bzw. bei einer vorgegebenen Paarung der Grenzwerte von Drehwinkel und Drehwinkelgeschwindigkeit, aufgrund von Nick- oder Rollbewegungen des Kraftfahrzeugs, Ausgangssignale zur Aktivierung von Sicherheitseinrichtungen ausgebbar sind.

Fig.1

Fig.2

Fig.3

Fig.4

Fig.5

Fig.6

Fig.7